# EUROPÄISCHE PATENTSCHRIFT

(11) **EP 2 411 400 B1**
(45) Veröffentlichungstag und Bekanntmachung des Hinweises auf die Patenterteilung: **05.09.2012**
(21) Anmeldenummer: 10707915.4
(22) Anmeldetag: 11.03.2010
(51) Int. Cl.: C07F 7/08

(54) **VERFAHREN ZUR SYNTHESE VON 1,3-BIS(AMINOALKYL)DISILOXANEN**
PROCESS FOR THE SYNTHESIS OF 1,3-BIS(AMINOALKYL)DISILOXANES
PROCÉDÉ DE SYNTHÈSE DE 1,3-BIS(AMINOALKYL)DISILOXANES

(30) Priorität: 23.03.2009 DE 102009001758
(43) Veröffentlichungstag der Anmeldung: 01.02.2012
(73) Patentinhaber: Wacker Chemie AG, 81737 München (DE)
(72) Erfinder: FRITZ-LANGHALS, Elke, 85521 Ottobrunn (DE); STOHRER, Jürgen, 82049 Pullach (DE)
(74) Vertreter: Fritz, Helmut
(86) Internationale Anmeldenummer: PCT/EP2010/053099
(87) Internationale Veröffentlichungsnummer: WO 2010/108785

(56) Entgegenhaltungen:
- EP-A2- 0 342 518
- DATABASE CA [Online] CHEMICAL ABSTRACTS SERVICE, COLUMBUS, OHIO, US; 2005, ARIMITSU, KOJI ET AL: "Application of novel base amplifiers with 3-nitropentan-2-yl group to UV-curing materials" XP002580780 gefunden im STN Database accession no. 144:352382 & ARIMITSU, KOJI ET AL: "Application of novel base amplifiers with 3-nitropentan-2-yl group to UV-curing materials" JOURNAL OF PHOTOPOLYMER SCIENCE AND TECHNOLOGY , 18(2), 227-228 CODEN: JSTEEW; ISSN: 0914-9244, 2005, in der Anmeldung erwähnt

## Beschreibung

Die Erfindung betrifft die Herstellung von Bis(aminoalkyl) disiloxanen aus den entsprechenden Carbamaten durch Erwärmen mit Wasser.

Bis(aminoalkyl) disiloxane sind wichtige Zwischenstufen in der Technik. Durch Umsetzung mit α,ω-Dihydroxypolysiloxanen oder mit cyclischen Siloxanen unter Ringöffnung können in einfacher Weise α,ω-Aminoalkylpolysiloxane hergestellt werden. Diese finden z.B. Anwendung bei der Synthese von Polyamiden, Polyurethanen und Polyimiden. α,ω-Aminoalkylpolysiloxane werden zudem für die Erhöhung der Hydrophobie und des Weichgriffs von Textilien eingesetzt.

Bislang wurde aber kein Verfahren gefunden, mit dem die Bis(aminoalkyl) disiloxane auf einfache Weise in hohen Reinheiten erhalten werden können.

DE 10049183 beschreibt die Synthese von Bis(aminopropyl)tetramethyldisiloxan durch Hydrolyse des sogenannten Azacyclus, welcher wiederum durch Umsetzung von 3-Chlorpropyldimethylchlorsilan mit Ammoniak unter hohem Druck hergestellt wird. Kritisch ist bei diesem Verfahren der erforderliche hohe Überschuss an Ammoniak unter hohem Druck, da andernfalls sekundäre und tertiäre Aminogruppen oder quartäre Ammoniumsalze entstehen können. Diese Gegebenheiten verteuern die Synthese von Bis(aminopropyl)tetramethyldisiloxan erheblich.

In EP 342518 ist ein weiterer Zugangsweg für Bis(aminopropyl)tetramethyldisiloxan beschrieben, nämlich die die Hydrosilylierung von Allylamin in Gegenwart von speziellen Platin-Katalysatoren bei Temp. über 100°C, die wegen des niedrigen Siedepunkts, der hohen Flüchtigkeit und des niedrigen Flammpunkts von Allylamin technisch nur schwierig zu realisieren ist.

Ein weiteres Problem bei der Verwendung von Allylamin ist dessen hohe Toxizität, die dem Einsatz in technischem Maßstab ebenfalls entgegensteht. Andere Edelmetall-katalysierte Hydrosilylierungen wurden an N,N-Bis(trialkylsilyl)allylaminen (US 6087520), N-Trialkylsilylaminen (Speier, J. Org. Chem. 1959, 24, 119) oder Allyliminen (JP63275591) durchgeführt. Die erforderliche N-Schützung vor der Hydrosilylierung und die Abspaltung der N-Schutzgruppen nach erfolgter Umsetzung machen diese Verfahren umständlich und teuer.

US 4631346 beschreibt die Umsetzung von Chlorsilanen (H-Si(R₂)-Cl) mit toxischem Allylamin, deren weitere Umsetzung mit CO₂ und nachfolgende Hydrosilylierung unter Bildung nicht näher charakterisierter vermutlich oligomerer Verbindungen mit Strukturelementen Si-O-CO-NH-(R)-Si, die mit Wasser in die Bis(aminoalkyl)disiloxane überführt werden können. Diese Spaltungsreaktion beruht auf der bekannten, extrem leichten Spaltbarkeit von Bindungen zwischen Silicium und Acylresten. Die Herstellung der oligomeren Verbindungen ist technisch sehr aufwändig.

In wenigen speziellen Fällen wurden Siloxan-haltige Amine durch thermische Zersetzung aus Carbamaten ohne die Einwirkung von Wasser hergestellt. Arimitsu et al., J. Photopolymer Sci. and Technol. 2005, 18, 227; 2002, 15, 41 beschreiben die Thermolyse thermolabiler Carbamatodisiloxane mit Nitropentanyl- und Fluorenylresten unter Bildung von Aminoalkyldisiloxanen.

Eine Arbeit von Kung et al. (J. Am. Chem. Soc. 2006, 128, 2776) beschreibt die Freisetzung von Aminogruppen in Siloxan-haltigen Nanopartikeln aus den entsprechenden BOC- (= tert. Butoxycarbonyl) geschützten Vorstufen mit Trimethyliodsilan.

Am Beispiel eines Silikats ist neben der thermischen auch die hydrolytische Umsetzung einer BOC-geschützten Aminogruppe in die entsprechende freie Aminogruppe beschrieben (A. Mehdi, New J. Chem. 2005, 29, 965). Jedoch ist die BOC-geschützte Vorstufe nur wiederum aus dem freien Amin selbst herstellbar, daher stellt dies keinen Zugangsweg für Aminoalkylsiloxane dar. BOC-geschützte Amine sind nicht aus kostengünstigen Edukten, z.B. Halogenalkanen, darstellbar. Zudem handelt es sich bei dem beschriebenen Stoff um ein im Wesentlichen anorganisches Feststoffmaterial, welches spezielle Merkmale, wie z.B. hohe thermische Stabilität und Unlöslichkeit, aufweist. Die Umwandlung erfolgt ausschließlich in den Hohlräumen dieses Feststoffs und nicht in Lösung.

Gegenstand der Erfindung ist ein Verfahren zur Synthese von Bis(aminoalkyl)disiloxanen der allgemeinen Formel I 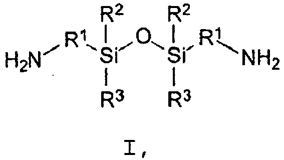 bei dem die Carbamatosilane der allgemeinen Formel IIIa oder die Carbamatodisiloxane der allgemeinen Formel IIIb oder deren Gemische 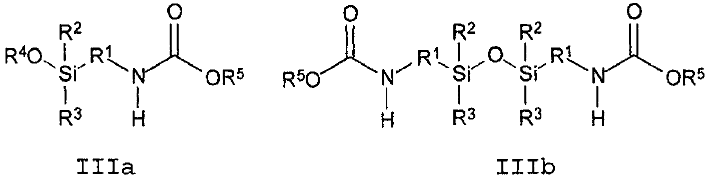 in Gegenwart von Wasser umgesetzt werden,
wobei
- **R¹**: einen zweiwertigen Kohlenwasserstoffrest mit 1 bis 100 C-Atomen bedeutet, wobei die Kohlenstoffkette durch nicht benachbarte Sauerstoffe, Schwefelatome, **-NR⁶** -(CO)- oder-NHCONH-Gruppen unterbrochen und die Wasserstoffe des zweiwertigen Kohlenwasserstoffrestes einzeln durch F, Cl, **NR⁷R⁸** oder **OR⁹**-Gruppen substituiert sein können, und
- **R², R³, R⁴, R⁵, R⁶, R⁷, R⁸** und **R⁹**: Kohlenwasserstoffreste mit 1 bis 100 C-Atomen bedeuten.

Das Verfahren ist kostengünstig, einfach durchzuführen und führt gleichzeitig hochselektiv zu den Bis(aminoalkyl)-disiloxanen der allgemeinen Formel (I).

**R¹** kann insbesondere ein zweiwertiger linearer oder verzweigter Alkyl-, Cycloalkyl-, Alkenyl-, Aryl- oder Aralkylrest sein. Bevorzugt handelt es sich bei **R¹** um einen linearen zweiwertigen Alkylrest mit 1-20 C-Atomen. Besonders bevorzugt handelt es sich bei **R¹** um einen Methylen-, Ethylen-, Propylen-, Butylen-, Pentylen- oder Hexylenrest.

**R², R³, R⁴, R⁵, R⁶, R⁷, R⁸** und **R⁹** können insbesondere lineare oder verzweigte Alkyl-, Cycloalkyl-, Aryl-, Alkenyl- oder Arylalkylreste sein. Bevorzugt weisen die Reste **R², R³, R⁴, R⁵, R⁶, R⁷, R⁸** und **R⁹** 1-20, insbesondere 1 bis 6 C-Atome auf.
Beispiele für Reste **R², R³, R⁴, R⁵, R⁶, R⁷ R⁸** und **R⁹** sind Alkylreste wie der Methyl-, Ethyl-, n-Propyl-, iso-Propyl-, n-Butyl-, iso-Butyl, n-Pentyl-, iso-Pentyl- oder neo-Pentyl-, Hexylreste, wie der n-Hexylrest, Heptylreste, wie der n-Heptylrest, Octylreste, wie der n-Octylrest, iso-Octylreste, Nonylreste, wie der n-Nonylrest, Decylreste, wie der n-Decylrest; Alkenylreste wie der Vinyl- und der Allylrest; Cycloalkylreste wie der Cyclopentyl-, Cyclohexyl-und der Cycloheptylrest; Arylreste wie der Phenylrest, Naphthylrest, oder o-, m- und p-Tolylreste.

Besonders bevorzugte Reste **R⁴** und **R⁵** sind der Methyl- und der Ethylrest. Das Verfahren zur Synthese von Bis(aminoakyl)disiloxanen der allgemeinen Formel I erfolgt bevorzugt bei Temperaturen von mindestens 30°C, besonders bevorzugt mindestens 70°C, insbesondere mindestens 90°C und vorzugsweise höchstens 300°C, besonders bevorzugt höchstens 250°C, insbesondere höchstens 200°C.

Die Reaktionszeit bei der Herstellung der Bis(aminoalkyl)disiloxane der allgemeinen Formel I beträgt vorzugsweise mindestens 0,5 Stunden, insbesondere mindestens 1 Stunde und vorzugsweise höchstens 30 Stunden, insbesondere höchstens 15 Stunden.

Der Druck bei der Herstellung der Bis(aminoalkyl)disiloxane der allgemeinen Formel I beträgt vorzugsweise mindestens 0,05 bar, insbesondere mindestens 0,1 bar und vorzugsweise höchstens 200 bar, besonders bevorzugt höchstens 100 bar, insbesondere höchstens 50 bar.

Das Verfahren wird bevorzugt in Gegenwart von mindestens 10 Mol %, besonders bevorzugt mindestens 50 Mol %, insbesondere mindestens 100 Mol % Wasser und vorzugsweise höchstens 5000 Mol %, insbesondere höchstens 1500 Mol % Wasser durchgeführt, jeweils bezogen auf die Summe der Carbamatogruppen und Methoxygruppen in den Carbamatosilanen der allgemeinen Formel IIIa oder den Carbamatogruppen in den Carbamatodisiloxanen der allgemeinen Formel IIIb.

Die Umsetzung kann in beliebigen Lösungsmitteln und Lösungsmittelgemischen, bevorzugt in Anteilen von mindestens 1 Gew. %, insbesondere mindestens 10 Gew. % und vorzugsweise höchstens 99 Gew. %, insbesondere höchstens 90 Gew. %, jeweils bezogen auf das Gewicht der gesamten Reaktionsmischung stattfinden.

Bevorzugt sind organische Solventien, die sich bei der Reaktionstemperatur mindestens im Verhältnis 1:10 oder 10:1 mit Wasser mischen. Als Beispiele hierfür werden Tetrahydrofuran, Dioxan, DMSO, N-Methylpyrrolidon, Alkohole oder Acetonitril genannt.

Als Lösungsmittel werden bevorzugt ein- oder mehrwertige Alkohole oder Gemische aus verschiedenen ein- oder mehrwertigen Alkoholen eingesetzt. Bevorzugt werden primäre oder sekundäre, ein- oder mehrwertige Alkohole eingesetzt. Typische Beispiele für die zugesetzten Alkohole sind Methanol, Ethanol, Propanol, Butanol, Ethylenglykol, Propylenglycol, Ethylenglykolmonomethylether, Ethylenglycoldiethylether, Glycerin oder Diethylenglykol.

Bevorzugt erfolgt die Umsetzung unter Zusatz von Katalysatoren bevorzugt in Anteilen von mindestens 0,1 Mol %, insbesondere mindestens 10 Mol % und vorzugsweise höchstens 500 Mol %, insbesondere höchstens 300 Mol %, jeweils bezogen auf das eingesetzte Carbamatosilan der allgemeinen Formel IIIa oder das Carbamatodisiloxan der allgemeinen Formel IIIb.

Bevorzugte Katalysatoren sind Säuren oder Basen.

Bevorzugte Säuren sind Mineralsäuren, beispielsweise Halogenwasserstoffsäuren wie z.B. Salzsäure, Schwefelsäure oder Phosphorsäure, oder organische Reste enthaltende Säuren, insbesondere organische Sulfonsäuren, wie zum Beispiel Methansulfonsäure oder p-Toluolsulfonsäure.

Bevorzugte Basen sind anorganische Metallhydroxide, insbesondere Alkali- und Erdalkalimetallhydroxide, besonders bevorzugte Basen sind Natriumhydroxid und Kaliumhydroxid.

In einer besonderen, speziell für Verbindungen der allgemeinen Formeln IIIa und IIIb mit R⁵ in der Bedeutung tert-Alkyl geeigneten Ausführungsform kann die Umsetzung zu Verbindungen der allgemeinen Formeln Ia und Ib auch in Abwesenheit von Wasser stattfinden, gegebenenfalls unter Zusatz eines sauren Katalysators, besonders bevorzugt unter Zusatz einer Säure in Anteilen von bevorzugt mindestens 0,01 Mol %, insbesondere mindestens 0,1 Mol % und vorzugsweise höchstens 20 Mol %, insbesondere höchstens 10 Mol %, jeweils bezogen auf das eingesetzte Carbamatosilan der allgemeinen Formel IIIa oder das Carbamatodisiloxan der allgemeinen Formel IIIb.

Bei der erfindungsgemäßen Herstellung von Bis(aminoalkyl)-disiloxanen der allgemeinen Formel I aus dem Carbamatosilan der allgemeinen Formel IIIa oder dem Carbamatodisiloxan der allgemeinen Formel IIIb in Gegenwart von Wasser können auch die Silanole der allgemeinen Formel Ia entstehen, die mit den Bis(aminoalkyl)disiloxanen der allgemeinen Formel I in einem von der Konzentration, der Temperatur, dem Wassergehalt und dem Katalysatorgehalt abhängigen Gleichgewicht stehen. Die Überführung der Silanole der allgemeinen Formel Ia in die Disiloxane der allgemeinen Formel I ist durch Entfernung von Wasser, beispielweise durch fraktionierte Destillation, problemlos möglich und ebenfalls Gegenstand der vorliegenden Erfindung.

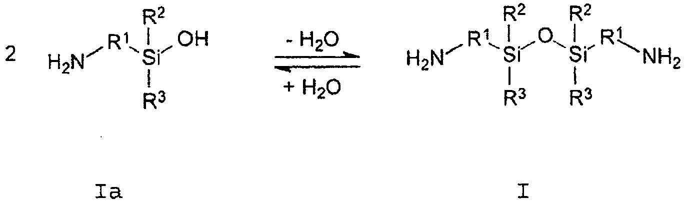

Das eingesetzte Carbamatosilan der allgemeinen Formel IIIa oder das Carbamatodisiloxan der allgemeinen Formel IIIb oder deren Gemische werden vorzugsweise hergestellt durch Umsetzung der Silane der allgemeinen Formeln IIa oder der Siloxane der allgemeinen Formeln IIb oder deren Gemische 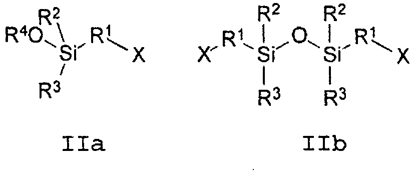 mit einem Cyanatsalz der Formel M(OCN)ₘ und einem Alkohol R⁵OH in einem polaren Lösungsmittel, wobei
- **X**: ein Halogenatom, ausgewählt aus Cl, Br oder I,
- **M**: ein Metallatom, ausgewählt aus K, Na, Li, Mg, Ca, Fe oder Mn, Zn, und
- **m**: die Werte 1, 2, 3 oder 4 bedeuten,
und
- **R¹, R², R³, R⁴** und **R⁵**: vorstehenden Bedeutungen aufweisen.

Vorzugsweise bedeutet X ein Chloratom.

**M** bedeutet bevorzugt K oder Na.

Das Cyanatsalz der Formel **M**(OCN)ₘ wird bevorzugt in Anteilen von mindestens 1 Äquivalent, insbesondere mindestens 1,1 Äquivalenten und vorzugsweise höchstens 5 Äquivalenten, insbesondere höchstens 3 Äquivalenten, jeweils bezogen auf die Gruppe **X** eingesetzt.

Der Alkohol **R⁵OH** wird bevorzugt in Anteilen von mindestens 1 Äquivalent, insbesondere mindestens 1,1 Äquivalenten und vorzugsweise höchstens 10 Äquivalenten, insbesondere höchstens 4 Äquivalenten, jeweils bezogen auf die Gruppe **X** eingesetzt.

Die Herstellung von Carbamatosilan der allgemeinen Formel IIIa oder Carbamatodisiloxan der allgemeinen Formel IIIb erfolgt gegebenenfalls in Anwesenheit eines Katalysators.
Als Katalysatoren werden gegebenenfalls Alkalimetalliodide oder -bromide, bevorzugt KI oder NaI, oder quartäre Ammonium- oder Phosphoniumsalze, beispielsweise aber nicht ausschließlich Methyltriphenylphosphoniumbromid, Methyl-tri-N-butylammoniumbromid oder Methyltrioctylammoniumbromid eingesetzt.

Der Anteil an Katalysatoren beträgt bevorzugt mindestens 0,01 Mol %, insbesondere mindestens 0,1 Mol % und vorzugsweise höchstens 10 Mol %, insbesondere höchstens 5 Mol %, jeweils bezogen auf die eingesetzten Verbindungen IIa oder IIb.

Bevorzugt handelt es sich bei den eingesetzten polaren Lösungsmitteln um dipolar aprotische Lösungsmittel wie Sulfoxide, beispielsweise DMSO, Amide, wie z.B. Formamid, N,N-Dimethylformamid, N,N-Dimethylacetamid oder N-Methylpyrrolidon, Ketone, wie z.B. Aceton oder Methylethylketon, Nitrile, wie z.B. Acetonitril, Propionitril oder Benzonitril, oder Ester, wie z.B. Essigsäureethylester.

Die Herstellung der Verbindungen der allgemeinen Formeln IIIa oder IIIb erfolgt bevorzugt bei Temperaturen von mindestens 80°C, besonders bevorzugt mindestens 100°C, insbesondere mindestens 120°C und vorzugsweise höchstens 200°C, besonders bevorzugt höchstens 160°C, insbesondere höchstens 150°C.

Die Reaktionszeit bei der Herstellung der Verbindungen der allgemeinen Formeln IIIa oder IIIb beträgt vorzugsweise mindestens 0,5 Stunden, insbesondere mindestens 1 Stunde und vorzugsweise höchstens 30 Stunden, insbesondere höchstens 10 Stunden.

Die Umsetzung kann durch Mischen der Komponenten in beliebiger Reihenfolge und Erhitzen, bevorzugt unter Rühren, erfolgen. Die Komponenten können auch bei erhöhter Temperatur oder direkt bei der Reaktionstemperatur gemischt werden.

In einer besonderen Ausführungsform kann aber auch das Cyanatsalz der Formel M(OCN)ₘ, gegebenenfalls der Katalysator und das polare Lösungsmittel vorgelegt werden und bei der Reaktionstemperatur die Verbindungen der allgemeinen Formeln IIa bzw. IIb im Gemisch mit dem Alkohol zugegeben werden.

In einer weiteren besonderen Ausführungsform können alle Komponenten bis auf die Verbindungen der allgemeinen Formeln IIa und IIb vorgelegt und diese dann bei der Reaktionstemperatur zugegeben werden.
Die Aufarbeitung kann in der üblichen, dem Fachmann bekannten Weise, erfolgen. In einer besonderen Ausführungsform wird das Lösungsmittel destillativ entfernt und der das Produkt und Salze enthaltende Rückstand direkt weiter umgesetzt.

In einer weiteren Ausführungsform kann das Carbamatosilan der allgemeinen Formel IIIa vor der Aufarbeitung durch Zusatz von Wasser in das Carbamatodisiloxan der allgemeinen Formel IIIb umgesetzt werden. Das ist bei der Verwendung von Solventien von Vorteil, die einen sehr hohen Siedepunkt haben und die daher vom Carbamatosilan der allgemeinen Formel IIIa (welches ja niedriger siedet als das Disiloxan) schwer abtrennbar sind.

Die Carbamate der allgemeinen Formeln IIIa und IIIb können in isolierter Form, jedoch auch als Rohprodukte aus der vorangehenden Synthesestufe, der Carbamatsynthese, eingesetzt werden. Die bei der Umsetzung anfallenden Salze müssen für die Herstellung von Bis(aminoalkyl)disiloxanen der allgemeinen Formel I nicht, wie z.B. in US-A 3,494,951 beschrieben, abgetrennt werden.

In einer bevorzugten Ausführungsform werden in einem ersten Schritt die Verbindungen der allgemeinen Formeln IIIa oder IIIb oder deren Gemische durch Umsetzung der Silane der allgemeinen Formeln IIa oder der Siloxane der allgemeinen Formeln IIb oder deren Gemische wie vorstehend beschrieben umgesetzt und in einem zweiten Schritt das Umsetzungsprodukt zur Herstellung der Synthese von Bis(aminoalkyl)disiloxanen der allgemeinen Formel I mit Wasser versetzt und vorzugsweise auf mindestens 30°C erwärmt.

Vorzugsweise wird nach dem ersten Schritt das Lösungsmittel destillativ abgetrennt und der Carbamat enthaltende Feststoff direkt weiter im zweiten Schritt umgesetzt.

Aus Halogenalkylhalogensilanen können durch Einwirkung von Alkoholen oder Wasser die Halogenalkylalkoxysilane der allgemeinen Formel IIa bzw. die Bis(halogenalkyl) disiloxane der allgemeinen Formel IIb sehr leicht und unproblematisch hergestellt werden. Da dies auch in technischem Maßstab gelingt, sind die Verbindungen IIa und IIb sehr gut geeignete Ausgangsmaterialien für die Verbindungen der allgemeinen Formel I. Von weiterem Vorteil ist, dass in Verbindungen der allgemeinen Formeln IIIa bzw. IIIb nur über eine Alkylgruppe gebundene Halogenatome vorliegen und nicht zusätzlich die hochreaktiven Si-Halogen-Gruppierungen, dies wirkt der Bildung von Nebenprodukten entgegen.

Alle vorstehenden Symbole der vorstehenden Formeln weisen ihre Bedeutungen jeweils unabhängig voneinander auf. In allen Formeln ist das Siliciumatom vierwertig.

In den folgenden Beispielen sind, falls jeweils nicht anders angegeben, alle Mengen- und Prozentangaben auf das Gewicht bezogen, alle Drücke 0,10 MPa (abs.) und alle Temperaturen 20°C.
MTBE bedeutet Methyltertiärbutylether.

### Beispiel 1

27,0 g (74 mmol) Bis(methylcarbamatopropyl)tetramethyldisiloxan und 91 ml 20 proz. wässrige Salzsäure werden 9 Std. unter Rückfluss gekocht, dann im Vakuum eingedampft und mit 28,5 ml 5N NaOH versetzt. Man trennt die wässrige Phase ab und destilliert die organische Phase zunächst unter Normaldruck zur Entfernung von Wasser. Vakuumdestillation liefert 17 g (92 %) reines Bis(aminopropyl)tetramethyldisiloxan. Sdp. 77°C / 4 mbar.
Si-NMR (D₂O/HCl): δ= 17,99 ppm und 10,76 ppm (Gemisch aus Disiloxan und Silanol).

### Beispiel 2

4,00 g (11,0 mmol) Bis(methylcarbamatopropyl)tetramethyldisiloxan und 4,15 ml 20proz. wässrige Salzsäure werden in einem Autoklaven auf 150°C erhitzt, durch Ablassen des gebildeten Kohlendioxids wird der Druck auf 5 bar begrenzt.
Nach 1 Std. Reaktionszeit beträgt der Umsatz zu Bis(aminopropyl)tetramethyldisiloxan 75 %.

### Beispiel 3

2,00 g (5,49 mmol) Bis(methylcarbamatopropyl)tetramethyldisiloxan werden mit 14 ml 2N H₂SO₄.16 Std. auf 100°C erhitzt (vollständiger Umsatz). Man stellt die Reaktionsmischung mit 5 M NaOH alkalisch, extrahiert mit MTBE und dampft die organische Phase im Vakuum ein. Ausbeute 1,28 g (94 %) Bis(aminopropyl)-tetramethyldisiloxan.

### Beispiel 4

2,00 g (5,49 mmol) Bis(methylcarbamatopropyl)tetramethyldisiloxan, 10 ml 5 M NaOH (25 mmol) und 5 ml Methanol werden 15 Std. unter Rückfluss gekocht (vollständiger Umsatz). Man verdünnt die Reaktionsmischung mit Wasser und extrahiert mit MTBE. Nach Eindampfen der organischen Phase erhält man 0,95 g (70%) Bis(aminopropyl)tetramethyldisiloxan.

### Beispiel 5

2,00 g (5,49 mmol)
Bis(methylcarbamatopropyl)tetramethyldisiloxan, 10 ml 5 M NaOH (25 mmol) und 5 ml Ethanol werden 15 Std. unter Rückfluss gekocht. Die Aufarbeitung erfolgt analog Beispiel 4, Ausbeute 60 %.

### Beispiel 6

2,00 g (5,49 mmol)
Bis(methylcarbamatopropyl)tetramethyldisiloxan werden mit 1,52 g (11,0 mmol) Kaliumcarbonat und 40 ml Wasser im Autoklaven 4 Std. auf 140°C erhitzt. Man säuert an, trennt die organische Phase ab, stellt die Wasserphase alkalisch, extrahiert sie mit Dichlormethan und dampft ein. Ausbeute 0,4 g Bis(aminopropyl)tetramethyldisiloxan.

### Beispiel 7

Eine Mischung aus 20 ml 1-Methyl-2-pyrrolidon, 7,53 g (92,8 mmol) Kaliumcyanat und 137 mg (0,83 mmol) Kaliumiodid wird unter Inertgas (Argon) bis auf 145°C erhitzt und bei dieser Temperatur unter Rühren ein Gemisch aus 13,6 g (81,6 mmol) 3-Chlorpropyldimethylmethoxysilan und 3,75 ml Methanol innerhalb von 2 Std. zugetropft, wobei die Temperatur zwischen 140 und 145 °C gehalten wird. Man rührt bei dieser Temp. noch bis zum vollständigen Umsatz weiter (ca. 4 Std.), lässt erkalten, filtriert und destilliert im Vakuum bei 11 mbar das Lösungsmittel ab. Der Rückstand wird mit 13 g 20 proz. Salzsäure 8 Std. unter Rückfluss gekocht. Man stellt mit 5 N NaOH alkalisch (pH 11), verdünnt gegebenenfalls mit wenig Wasser um zwei klare Phasen zu erhalten, und trennt die Wasserphase ab. Die organische Phase enthält ein 1:1 - Gemisch aus dem Silanol Ia und dem Disiloxan, Ausbeute (NMR-Standardanalyse) 80 %.

### Beispiel 8

Eine Mischung aus 60 ml 1-Methyl-2-pyrrolidon, 15,1 g (186 mmol) Kaliumcyanat, 3,09 g (18,6 mmol) Kaliumiodid, 22,6 g (98,8 proz., 77,7 mmol) Bis(chlorpropyl)disiloxan und 7 ml Methanol wird unter Rühren und unter Inertgas (Argon) bis auf 120°C erhitzt und bei dieser Temperatur innerhalb von 5 Std. weitere 11 ml Methanol zugegeben. Man lässt erkalten, filtriert und destilliert im Vakuum bei 11 mbar das Lösungsmittel ab. Der Rückstand (24 g) wird mit 120 ml 20 proz. Salzsäure 8 Std. unter Rückfluss gekocht. Man stellt mit 5 N NaOH alkalisch (pH 11), verdünnt gegebenenfalls mit wenig Wasser, um zwei klare Phasen zu erhalten, und trennt die Wasserphase ab. Die organische Phase enthält ein Gemisch aus dem Silanol, dem Disiloxan und ca. 20 % Wasser, Ausbeute (NMR-Standardanalyse) 50 %.

## Patentansprüche

1. Verfahren zur Synthese von Bis(aminoalkyl)disiloxanen der allgemeinen Formel I 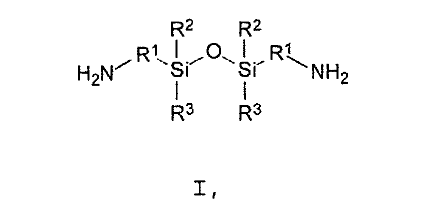 bei dem die Carbamatosilane der allgemeinen Formel IIIa oder die Carbamatodisiloxane der allgemeinen Formel IIIb oder deren Gemische 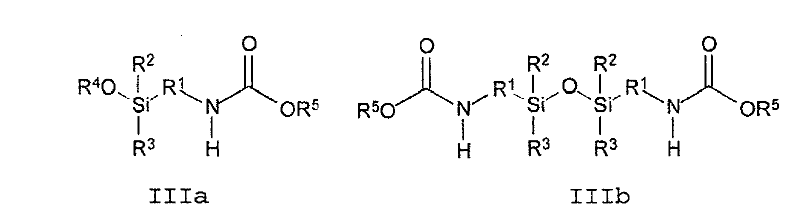 in Gegenwart von Wasser umgesetzt werden, wobei
**R¹** einen zweiwertigen Kohlenwasserstoffrest mit 1 bis 100 C-Atomen bedeutet, wobei die Kohlenstoffkette durch nicht benachbarte Sauerstoffe, Schwefelatome, **-NR⁶** -(CO)- oder - NHCONH-Gruppen unterbrochen und die Wasserstoffe des zweiwertigen Kohlenwasserstoffrestes einzeln durch F, Cl, **NR⁷R⁸** oder **OR⁹**-Gruppen substituiert sein können, und
**R², R³, R⁴, R⁵, R⁶, R⁷, R⁸** und **R⁹** Kohlenwasserstoffreste mit 1 bis 100 C-Atomen bedeuten.

2. Verfahren nach Anspruch 1, bei dem **R¹** ein linearer zweiwertiger Alkylrest mit 1-20 C-Atomen ist.

3. Verfahren nach Anspruch 1 oder 2, welches bei 30°C bis 300°C durchgeführt wird.

4. Verfahren nach Anspruch 1 bis 3, welches in Gegenwart von 10 Mol % bis 5000 Mol % Wasser, jeweils bezogen auf die Summe der Carbamatogruppen und Methoxygruppen in den Carbamatosilanen der allgemeinen Formel IIIa oder den Carbamatogruppen in den Carbamatodisiloxanen der allgemeinen Formel IIIb, durchgeführt wird.

5. Verfahren nach Anspruch 1 bis 4, welches in Gegenwart von Säuren oder Basen als Katalysatoren durchgeführt wird.

6. Verfahren nach Anspruch 1 bis 5, bei dem als Nebenprodukt die Silanole der allgemeinen Formel Ia 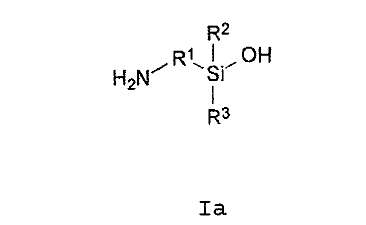 entstehen, und bei dem aus den Silanolen der allgemeinen Formel Ia durch Freisetzung von Wasser die Bis(aminoalkyl)-disiloxane der allgemeinen Formel I gebildet werden, wobei **R¹, R²** und **R³** die in Anspruch 1 angegebenen Bedeutungen aufweisen.

7. Verfahren nach Anspruch 1 bis 6, bei dem in einem ersten Schritt das Carbamatosilan der allgemeinen Formel IIIa oder das Carbamatodisiloxan der allgemeinen Formel IIIb oder deren Gemische durch Umsetzung der Silane der allgemeinen Formel IIa oder der Siloxane der allgemeinen Formel IIb oder deren Gemische 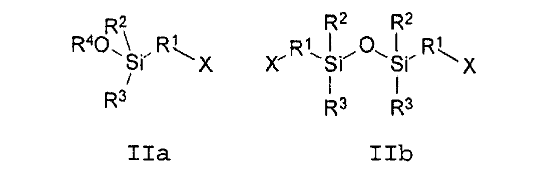 mit einem Cyanatsalz der Formel M(OCN)ₘ und einem Alkohol R⁸OH in einem polaren Lösungsmittel hergestellt werden,
wobei
**X** ein Halogenatom, ausgewählt aus Cl, Br oder I,
**M** ein Metallatom, ausgewählt aus K, Na, Li, Mg, Ca, Fe, Mn oder Zn, und
**m** die Werte 1, 2, 3 oder 4 bedeuten,
und **R¹, R², R³, R⁴** und **R⁵** die vorstehenden Bedeutungen aufweisen,
und in einem zweiten Schritt das Umsetzungsprodukt zur Herstellung der Synthese von Bis(aminoalkyl)disiloxanen der allgemeinen Formel I mit Wasser versetzt wird.

8. Verfahren nach Anspruch 7, bei dem **X** eine Chlorgruppe bedeutet.

9. Verfahren nach Anspruch 7 oder 8, bei dem **M** K oder Na bedeutet.

## Claims

1. Process for synthesis of bis(aminoalkyl)-disiloxanes of the general formula I 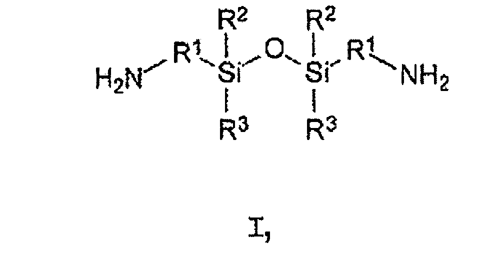 which comprises reacting the carbamatosilanes of the general formula IIIa or the carbamatodisiloxanes of the general formula IIIb or mixtures thereof 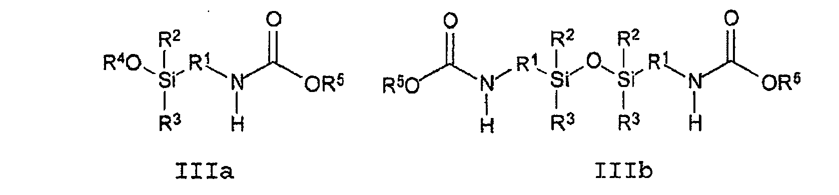 in the presence of water, where
R¹ denotes a divalent hydrocarbon radical of 1 to 100 carbon atoms, wherein the carbon chain may be interrupted by nonadjacent oxygens, sulfur atoms, -NR⁶-(CO)- or -NHCONH- groups and the hydrogens of the divalent hydrocarbon radical may individually be replaced by F, Cl, NR⁷R⁸ or OR⁹ groups, and
R², R³, R⁴, R⁵, R⁶, R⁷, R⁸ and R⁹ are hydrocarbon radicals of 1 to 100 carbon atoms.

2. Process according to Claim 1 wherein R¹ is a linear divalent alkyl radical of 1-20 carbon atoms.

3. Process according to Claim 1 or 2 conducted at 30°C to 300°C.

4. Process according to Claim 1 to 3 conducted in the presence of 10 mol% to 5000 mol% of water, each based on the sum total of the carbamato groups and methoxy groups in the carbamatosilanes of the general formula IIIa or the carbamato groups in the carbamatodisiloxanes of the general formula IIIb.

5. Process according to Claim 1 to 4 conducted in the presence of acids or bases as catalysts.

6. Process according to Claim 1 to 5 wherein the silanols of the general formula Ia 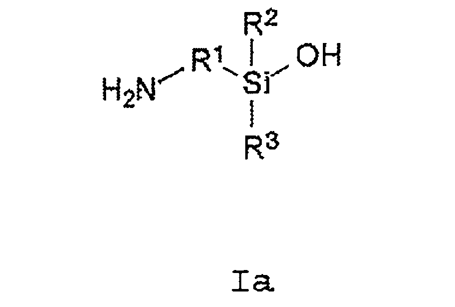 are by-produced and wherein the silanols of the general formula Ia release water to form the bis(aminoalkyl)disiloxanes of the general formula I, where R¹, R² and R³ are each as defined in Claim 1.

7. Process according to Claim 1 to 6 wherein, in a first step, the carbamatosilane of the general formula IIIa or the carbamatodisiloxane of the general formula IIIb or mixtures thereof are formed by reacting the silanes of the general formula IIa or the siloxanes of the general formula IIb or mixtures thereof 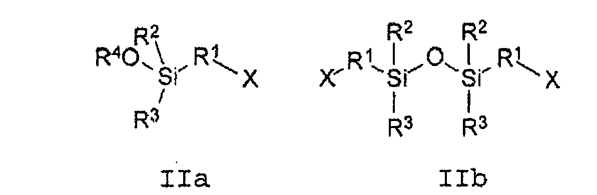 with a cyanate salt of the formula M(OCN)ₘ and an alcohol R⁵OH in a polar solvent,
where
X is a halogen atom selected from Cl, Br or I,
M is a metal atom selected from K, Na, Li, Mg, Ca, Fe, Mn or Zn, and
m is 1, 2, 3 or 4,
and R¹, R², R³, R⁴ and R⁵ are each as defined above, and, in a second step, the reaction product is admixed with water to produce the synthesis of bis(aminoalkyl)disiloxanes of the general formula I.

8. Process according to Claim 7 wherein X is a chlorine group.

9. Process according to Claim 7 or 8 wherein M is K or Na.

## Revendications

1. Procédé pour la synthèse de bis(aminoalkyl)disiloxanes de formule générale I 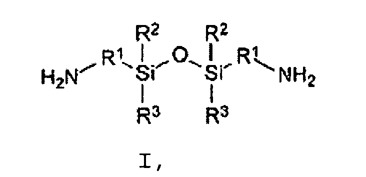 dans lequel on fait réagir en présence d'eau les carbamatosilanes de formule générale IIIa ou les carbamatodisiloxanes de formule générale IIIb ou des mélanges de ceux-ci 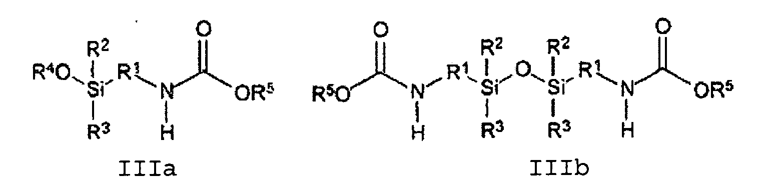 où
R¹ représente un radical hydrocarboné divalent ayant de 1 à 100 atomes de carbone, la chaîne carbonée pouvant être interrompue par des atomes d'oxygène, des atomes de soufre, des groupes -**NR⁶**-(CO)- ou -NHCONH- non contigus et les atomes d'hydrogène du radical hydrocarboné divalent pouvant être remplacés individuellement par F, Cl, des groupes **NR⁷ R⁸** ou **OR⁹,** et
**R², R³, R⁴, R⁵, R⁶, R⁷, R⁸** et **R⁹** représentent des radicaux hydrocarbonés ayant de 1 à 100 atomes de carbone.

2. Procédé selon la revendication 1, dans lequel **R¹** est un radical alkyle linéaire divalent ayant de 1 à 20 atomes de carbone.

3. Procédé selon la revendication 1 ou 2, qui est effectué à une température de 30 °C à 300 °C.

4. Procédé selon l'une quelconque des revendications 1 à 3, qui est effectué en présence de 10 % en moles à 5 000 % en moles d'eau, chaque fois par rapport à la somme des groupes carbamato et des groupes méthoxy dans les carbamatosilanes de formule générale IIIa ou des groupes carbamato dans les carbamatodisiloxanes de formule générale IIIb.

5. Procédé selon l'une quelconque des revendications 1 à 4, qui est effectué en présence d'acides ou de bases en tant que catalyseurs.

6. Procédé selon l'une quelconque des revendications 1 à 5, dans lequel en tant que produit secondaire se forment les silanols de formule générale Ia 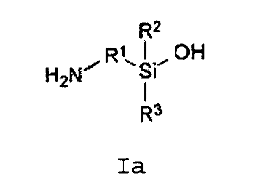 et dans lequel les bis(aminoalkyl)disiloxanes de formule générale I sont formés par libération d'eau à partir des silanols de formule générale Ia, **R¹, R²** et **R³** ayant les significations indiquées dans la revendication 1.

7. Procédé selon l'une quelconque des revendications 1 à 6, dans lequel, dans une première étape, on prépare le carbamatosilane de formule générale IIIa ou le carbamatodisiloxane de formule générale IIIb ou des mélanges de ceux-ci, par mise en réaction des silanes de formule générale IIa ou des siloxanes de formule générale IIb ou de mélanges de ceux-ci 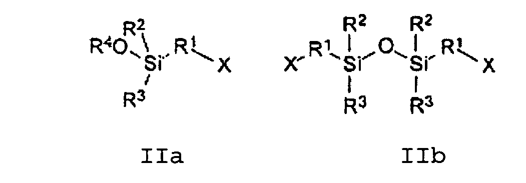 avec un sel cyanate de formule M(OCN)ₘ et un alcool R⁵ OH dans un solvant polaire,
**X** représentant un atome d'halogène, choisi parmi Cl, Br ou I,
**M** représentant un atome d'un métal, choisi parmi K, Na, Li, Mg, Ca, Fe, Mn ou Zn, et
**m** représentant les valeurs 1, 2, 3 ou 4,
et
**R¹, R², R³, R**⁴ et **R**⁵ ayant les significations précédentes,
et, dans une deuxième étape, on ajoute de l'eau au produit de réaction pour la production de la synthèse de bis(aminoalkyl)disiloxanes de formule générale I.

8. Procédé selon la revendication 7, dans lequel **X** représente un groupe de chlore.

9. Procédé selon la revendication 7 ou 8, dans lequel **M** représente K ou Na.
